# EUROPÄISCHE PATENTANMELDUNG

(11) **EP 4 484 342 A1**
(43) Veröffentlichungstag der Anmeldung: **01.01.2025**
(21) Anmeldenummer: 23182562.1
(22) Anmeldetag: 30.06.2023
(51) Int. Cl.: B65G 47/86, B67C 7/00

(54) **GREIFVORRICHTUNG SOWIE TRANSPORTVORRICHTUNG**

(71) Anmelder: Tyrolon-Schulnig GmbH, 6395 Hochfilzen (AT)
(72) Erfinder: Schulnig, Elmar, 6395 St. Jakob i.H. (AT); Schulnig, Ludwig, 6392 St. Jakob i.H. (AT)
(74) Vertreter: Meissner Bolte Partnerschaft mbB

(57) **Zusammenfassung**

Es wird eine Greifvorrichtung (2) zum Greifen, Halten und Führen von insbesondere flaschenartigen Behältern (4) angegeben, mit einem ersten und einem zweiten Greifarmpaar (6, 8), wobei jedes Greifarmpaar (6, 8) einen ersten Greifarm (10) und einen gegengleich ausgebildeten zweiten Greifarm (12) aufweist; einer Lagereinheit (14) zum Lagern der Greifarmpaare (6, 8), wobei die Lagereinheit (14) mindestens einen ersten und zweiten Lagerbolzen (16, 18) zum schwenkbaren Lagern des ersten und zweiten Greifarmpaares (6, 8) von einer Greifstellung in eine Öffnungsstellung oder umgekehrt aufweist; wobei das erste und das zweite Greifarmpaar (6, 8) jeweils ein erstes Öffnungsmittel (20) aufweist und die Lagereinheit (14) ferner ein zweites Öffnungsmittel (24) aufweist, wobei die beiden Öffnungsmittel (20, 24) derart ausgebildet sind, das erste Greifarmpaar (6) unabhängig vom zweiten Greifarmpaar (8) von der Greifstellung in die Öffnungsstellung zu bewegen. Ferner wird eine Transportvorrichtung (40) angegeben.

## Beschreibung

Die Erfindung betrifft eine Greifvorrichtung sowie eine Transportvorrichtung zum Greifen, Halten und Führen von insbesondere flaschenartigen Behältern.

Greifvorrichtungen zum Greifen, Halten und/oder Führen von insbesondere im Wesentlichen rund geformten Behältern sind bereits aus dem Stand der Technik bekannt und werden bei der fließbandtechnischen Bearbeitung derartiger Behälter verwendet.

Unter dem Begriff "Behälter" sind im Zusammenhang mit der vorliegenden Erfindung, insbesondere, aber nicht ausschließlich Behälter mit einem im Wesentlichen kreisförmigen Querschnitt zu verstehen, zum Beispiel Fläschchen oder Dosen oder Gläschen, die jeweils den Gepflogenheiten entsprechend aus Glas, Metall oder Kunststoff bestehen können. Unter dem Begriff "im Wesentlichen rund geformt" sind im Zusammenhang mit der vorliegenden Erfindung nicht ausschließlich im geometrischen Sinne, rund geformte Behälter zu verstehen, sondern beispielsweise auch ovale, regelmäßig vieleckige usw., welche dann insbesondere einen im Wesentlichen kreisförmigen, beispielsweise aber auch ovalen oder vieleckigen Querschnitt aufweisen.

Beim Reinigen, Befüllen oder Verschließen, werden die Behälter üblicherweise bei einer Eingangsstation mittels einer Greifvorrichtung mit mindestens einem Greifarmpaar gegriffen und zu einer nächsten Station im Bearbeitungsprozess transportiert. Eine solche Greifvorrichtung für ein Behältertransportsystem besitzt typischerweise wenigstens zwei Greifarme und kann zwischen einer Greifstellung und einer Öffnungsstellung wechseln. Um einen Behälter zu transportieren, greifen die Greifarme normalerweise unterhalb des Halskragens oder - bei Flaschen oder anderen länglichen Behältern - um den Bauch des Behälters.

Beispielsweise fungiert ein Steuernocken hierbei als Öffnungsmittel und eine Feder als Schließmittel für die Greifvorrichtung. Wenn hierbei die Greifvorrichtung durch den Steuernocken geöffnet wird, wird eine Kraft gegen eine Greifarminnenseite des Greifarms entgegen der Federkraft aufgewendet. Der Steuernocken drückt also mit anderen Worten entgegen der Federkraft das Greifarmpaar auseinander.

Die Federkraft der Feder dient nicht nur dem Schließen der Greifvorrichtung, sondern auch dem kraftschlüssigen Halten des Behälters. Daher ist die Federkraft entsprechend ausgebildet.

Insbesondere, wenn der Behälter im Bauch gefasst werden soll, muss die Greifvorrichtung geeignet sein, den Behälter in einer bestimmten, insbesondere senkrechten Lage stabil festzuhalten. Eine hohe Drehgeschwindigkeit einer Transportvorrichtung, welche beispielsweise eine Vielzahl von insbesondere kreisförmig angeordneten Greifvorrichtungen aufweist, verleiht insbesondere schweren und/oder gefüllten Behältern eine Beschleunigung, die entlang der Längsachse des Behälters aufgrund der Form und/oder der Befüllung des Behälters unterschiedlich ausfallen kann. In Abhängigkeit hierzu können dann verschiedene, starke Kräfte auf die Greifvorrichtung ausgeübt werden.

Weiterhin kann jedoch auch bei einer linearen Bewegung der Greifvorrichtung ein Behälter eine Anfangs-, bzw. Endbeschleunigung erfahren und somit Kräfte auf die Greifvorrichtung ausüben.

Daher werden normalerweise Greifabschnitte der Greifarme verwendet, die eine auf den Bauch des Behälters passgenau Form aufweisen und/oder an verschiedenen Stellen des Bauchs mittels mehrerer Greiffinger des Greifabschnitts entlang der Längsachse des Behälters zu greifen. Ein Schwenken des Behälters um seine Längsachse kann somit unterdrückt bzw. der Behälter beim Transport in seiner Lage stabilisiert werden.

Ausgehend hiervon liegt der Erfindung daher die Aufgabe zugrunde, eine Greifvorrichtung sowie eine Transportvorrichtung anzugeben, die einen einfachen Aufbau aufweist und zudem an die vorstehend genannten Anforderungen angepasst ist.

Mit Blick auf die Greifvorrichtung wird die Aufgabe erfindungsgemäß gelöst durch eine Greifvorrichtung mit den Merkmalen des Anspruchs 1. Mit Blick auf die Transportvorrichtung wird die Aufgabe erfindungsgemäß gelöst durch eine Transportvorrichtung mit den Merkmalen des Anspruchs 10.

Konkret wird die auf die Greifvorrichtung gerichtete Aufgabe gelöst durch eine Greifvorrichtung zum Greifen, Halten und Führen von insbesondere flaschenartigen Behältern, mit einem ersten und einem zweiten Greifarmpaar, wobei jedes Greifarmpaar einen ersten Greifarm und einen gegengleich ausgebildeten zweiten Greifarm aufweist.

Die beiden Greifarmpaar sind hierbei vorzugsweise derart angeordnet, dass das erste Greifarmpaar den Behälter, beispielsweise eine Flasche, an einem oberen Bereich, z.B. unterhalb des Halskragens greift. Das zweite Greifarmpaar greift den Behälter vorzugsweise am Bauch, sodass der Behälter somit an zwei Stellen stabil gehalten wird.

Ferner weist die Greifvorrichtung eine Lagereinheit zum Lagern der Greifarmpaare auf, wobei die Lagereinheit mindestens einen ersten und zweiten Lagerbolzen zum schwenkbaren Lagern des ersten und zweiten Greifarmpaares von einer Greifstellung in eine Öffnungsstellung oder umgekehrt aufweist. Das erste und das zweite Greifarmpaar weisen jeweils ein erstes Öffnungsmittel auf und die Lagereinheit ferner ein zweites Öffnungsmittel, wobei die beiden Öffnungsmittel derart ausgebildet sind, das erste Greifarmpaar unabhängig vom zweiten Greifarmpaar von der Greifstellung in die Öffnungsstellung zu bewegen.

Mit anderen Worten sind die Öffnungsmittel derart ausgebildet, dass das erste Greifarmpaar hinsichtlich eines Öffnungszeitpunktes und/oder eines Öffnungswinkels unabhängig und verschieden vom zweiten Greifarmpaar angesteuert werden kann. Unter dem Begriff "Öffnungswinkel" wird im Sinne dieser Anmeldung ein Winkel verstanden, der angibt, wie weit sich das Greifarmpaar öffnen kann. Selbstverständlich gilt das Gleiche für ein unabhängiges Schließen der beiden Greifarmpaare. Diese Ausgestaltung trägt somit auch dem Gedanken Rechnung, dass sich das erste Greifarmpaar nicht so weit öffnen muss als das zweite Greifarmpaar, weil das erste Greifarmpaar den - im Vergleich zum Bauch - für gewöhnlich dünneren Halskragen des Behälters greift. Diese Ausgestaltung ermöglicht eine einfache und an die eingangs genannten Anforderungen angepasste Greifvorrichtung.

Zum unabhängigen Bewegen und Ansteuern der beiden Greifarmpaare weist das erste Öffnungsmittel des ersten Greifarmpaares und das erste Öffnungsmittel des zweiten Greifarmpaares jeweils eine Rolle auf, wobei die Rollen unterschiedlich ausgebildet sind, insbesondere unterschiedliche Durchmesser aufweisen, und während des Bewegens von der Greifstellung in die Öffnungsstellung in Kontakt mit dem zweiten Öffnungsmittel treten, um das erste Greifarmpaar unabhängig vom zweiten Greifarmpaar zu öffnen. In einer Ausführungsform können die Rollen auch gleich ausgebildet sein, z.B. gleiche Durchmesser aufweisen.

Alternativ oder ergänzend ist das zweite Öffnungsmittel als Steuernocke ausgebildet, die eine erste Steuerkurve und eine zweite Steuerkurve aufweist, wobei die Steuerkurven unterschiedliche Durchmesser aufweisen, um das erste Greifarmpaar unabhängig vom zweiten Greifarmpaar zu öffnen. Hierbei treten die Steuerkurven mit den Rollen in Kontakt. Die Steuerkurve übt eine Kraft auf die Rollen auf, die wiederum die Kraft derart auf die Greifarme des jeweiligen Greifarmpaares übertragen, dass sich diese öffnen. In einer Ausführungsform können Steuerkurven auch gleiche Durchmesser aufweisen.

Die unterschiedlichen Öffnungszeitpunkte oder -winkel werden insbesondere dadurch erreicht, dass beispielsweise die Rollen und/oder die Steuerkurven unterschiedliche Durchmesser aufweisen. Somit erfährt beispielsweise das erste Greifarmpaar eher eine Öffnungskraft, als das zweite Greifarmpaar, weil durch die unterschiedlichen Durchmesser die Steuerkurve, die das erste Greifarmpaar steuert bereits in Kontakt mit der Rolle des ersten Greifarmpaares kommt.

Hierdurch ist zum einen eine einfache Ausgestaltung und zum anderen eine genaue Anpassung an die jeweiligen Behältergrößen und Durchmesser erreicht.

In einer Ausführungsform sind der jeweils erste Greifarm des ersten Greifarmpaares und des zweiten Greifarmpaares auf dem ersten Lagerbolzen angeordnet und jeweils der zweite Greifarm des ersten Greifarmpaares und des zweiten Greifarmpaares auf dem zweiten Lagerbolzen angeordnet. Mit anderen Worten sind die beiden Greifarmpaare übereinander auf den Lagerbolzen angeordnet. Somit können die Greifarmpaar die bereits erwähnten Bereiche des Behälters greifen, ohne dass mehrere oder kompliziertere Anordnungen mit mehreren Ebenen und/oder Lagerbolzen notwendig sind.

Gemäß einer weiteren Ausführungsform weist das erste Greifarmpaar ein erstes Schließmittel auf, zum Bewegen des ersten Greifarmpaares von der Öffnungsstellung in die Greifstellung.

Ergänzend weist das zweite Greifarmpaar ein zweites Schließmittel auf, um das zweiten Greifarmpaar von der Öffnungsstellung in die Greifstellung zu bewegen.

Vorzugsweise ist das erste Schließmittel als ein Magnetpaar ausgebildet. Hierbei ist jeweils ein Magnet des sich anziehenden Magnetpaares in einem der Greifarme des Greifarmpaares angeordnet. Dieser Ausgestaltung liegt der Gedanke zugrunde, dass das erste Greifarmpaar den dünneren Halskragen des Behälters greift und somit keinen großen Öffnungswinkel aufweist. Somit ist die Magnetkraft des Magnetpaares ausreichend, um das Greifarmpaar zu schließen. Alternativ ist jedoch auch ein Federelement, wie z.B. eine Helixfeder denkbar.

Das zweite Schließmittel ist vorzugsweise als Federelement, insbesondere als Helixfeder ausgebildet. Dieser Ausgestaltung liegt der Gedanke zugrunde, dass das zweite Greifarmpaar den dickeren Bauch des Behälters greift und an diesem die Haupthaltekraft aufbringt. Somit ist eine starke Zugkraft des zweiten Schließmittels erforderlich, um den Behälter zu halten. Hierfür haben sich Federelemente als besonders geeignet erwiesen. Alternativ wäre jedoch auch eine Verwendung eines Magnetpaares denkbar, wenn dessen Anziehungskraft ausreichend ist.

Gemäß einer Ausführungsform weist das erste Greifarmpaar einen ersten Greifabschnitt mit einem ersten Greifdurchmesser und das zweite Greifarmpaar einen zweiten Greifabschnitt mit einem zweiten Greifdurchmesser auf, wobei der erste Greifdurchmesser kleiner ist als der zweite Greifdurchmesser. Diese Ausgestaltung ist vorteilhaft, um zum einen den Halskragen des Behälters mit dem ersten Greifarmpaar und zum anderen den Bauch des Behälters mit dem zweiten Greifarmpaar zu greifen.

Konkret wird die auf die Transportvorrichtung gerichtete Aufgabe durch eine Transportvorrichtung zum Greifen, Halten und Führen von insbesondere flaschenartigen Behältern gelöst. Die Transportvorrichtung weist hierbei in einer Umfangsrichtung wenigstens eine Greifvorrichtung der vorstehend beschriebenen Art auf. Die wenigstens eine Greifvorrichtung ist dabei derart angeordnet, dass die Greifarmpaare der Greifvorrichtung radial nach außen gerichtet sind.

Die im Hinblick auf die Greifvorrichtung aufgeführten Vorteile und bevorzugten Ausgestaltungen sind sinngemäß auf die Transportvorrichtung zu übertragen und umgekehrt.

Ausführungsbeispiele der Erfindung werden nachstehend anhand der Figuren näher erläutert. Diese zeigen in stark vereinfachter Darstellung:
- Fig. 1: eine Seitenansicht auf die erfindungsgemäße Greifvorrichtung;
- Fig. 2: eine Seitenansicht der erfindungsgemäßen Transportvorrichtung mit einer daran angeordneten Greifvorrichtung gemäß Fig. 1;
- Fig. 3: eine Draufsicht auf die Transportvorrichtung gemäß Fig. 2 sowie
- Fig. 4: eine Frontansicht der Transportvorrichtung gemäß Fig. 2

In den Figuren sind gleichwirkende Teile stets mit den gleichen Bezugszeichen dargestellt.

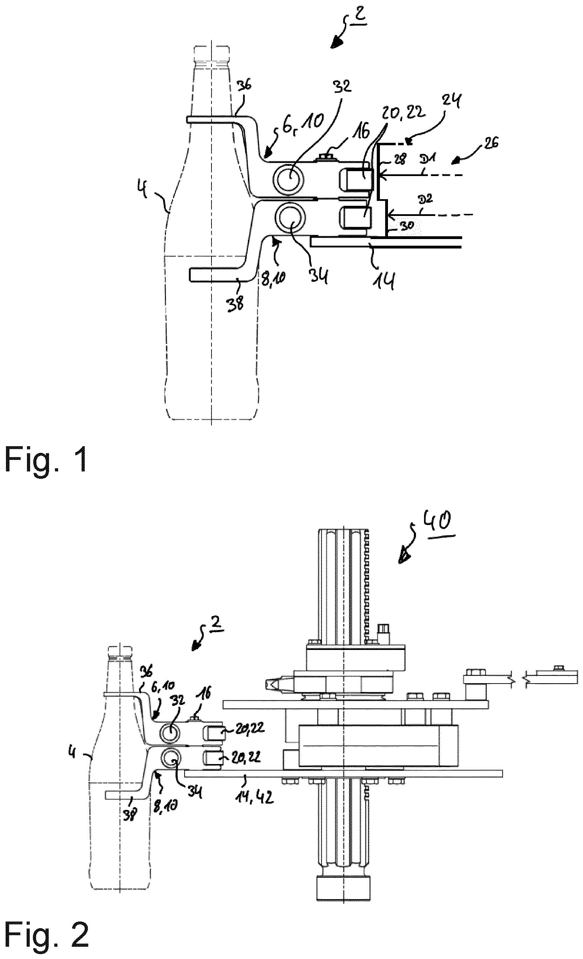

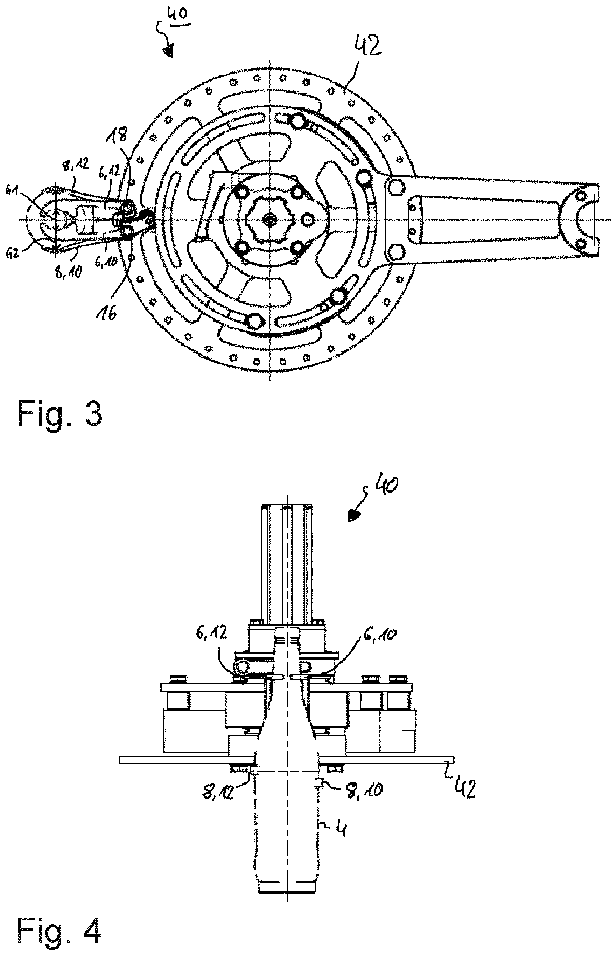

In Fig. 1 ist eine Seitenansicht der erfindungsgemäßen Greifvorrichtung 2 gezeigt. Die Greifvorrichtung 2 ist zum Greifen, Halten und Führen von insbesondere flaschenartigen Behältern 4 ausgebildet. Hierzu weist die Greifvorrichtung 2 ein erstes und ein zweites Greifarmpaar 6, 8 auf, wobei jedes Greifarmpaar 6, 8 einen ersten Greifarm 10 und einen gegengleich ausgebildeten zweiten Greifarm 12 aufweist (vgl. Fig. 3).

Ferner weist die Greifvorrichtung 2 eine Lagereinheit 14 zum Lagern der Greifarmpaare 6, 8 auf, wobei die Lagereinheit 14 einen ersten und zweiten Lagerbolzen 16, 18 zum schwenkbaren Lagern des ersten und zweiten Greifarmpaares 6, 8 von einer Greifstellung in eine Öffnungsstellung oder umgekehrt aufweist (vgl. Fig. 3).

Des Weiteren weist das erste und das zweite Greifarmpaar 6, 8 jeweils ein erstes Öffnungsmittel 20 auf, das im Ausführungsbeispiel jeweils eine Rolle 22 aufweist bzw. als eine Rolle 22 ausgebildet ist. Die Rollen 22 sind vorzugsweise unterschiedlich ausgebildet. Insbesondere weisen sie unterschiedliche Durchmesser auf. Die Lagereinheit 14 weist ein zweites Öffnungsmittel 24 auf. Während des Bewegens von der Greifstellung in die Öffnungsstellung kommt das erste Öffnungsmittel 20 in Kontakt mit dem zweiten Öffnungsmittel 24, um das erste Greifarmpaar 6 unabhängig vom zweiten Greifarmpaar 8 zu öffnen. Hierzu weist das zweite Öffnungsmittel 24 im Ausführungsbeispiel gemäß Fig. 1 eine Steuernocke 26 auf bzw. ist als eine Steuernocke 26 ausgebildet. Die Steuernocke 26 weist eine erste Steuerkurve 28 und eine zweite Steuerkurve 30 auf, wobei die Steuerkurven 28, 30 unterschiedliche Durchmesser D1, D2 aufweisen. Im Ausführungsbeispiel gemäß Fig. 1 ist der Durchmesser D1 der ersten Steuerkurve 28, die das erste Greifarmpaar 6 steuert größer als der Durchmesser D2 der zweiten Steuerkurve 30, die das zweite Greifarmpaar 8 steuert.

Darüber hinaus weist das erste Greifarmpaar 6 ein erstes Schließmittel 32 auf, das im Ausführungsbeispiel als ein Magnetpaar ausgebildet ist. Das erste Schließmittel 32 dient zum Bewegen des ersten Greifarmpaares 6 von der Öffnungsstellung in die Greifstellung und zum Halten des Behälters 4. Analog hierzu weist das zweite Greifarmpaar 8 ein zweites Schließmittel 34 auf. Das zweite Schließmittel 34 ist vorzugsweise als Federelement ausgebildet, kann alternativ hierzu jedoch auch als Magnetpaar ausgebildet sein und dient zum Bewegen des zweiten Greifarmpaares 8 von der Öffnungsstellung in die Greifstellung und ebenfalls zum Halten des Behälters 4.

Zum Greifen und Halten des Behälters 4 weist das erste Greifarmpaar 6 einen ersten Greifabschnitt 36 mit einem ersten Greifdurchmesser G1 auf. Analog hierzu weist das zweite Greifarmpaar 8 einen zweiten Greifabschnitt 38 mit einem zweiten Greifdurchmesser G2 auf, wobei der erste Greifdurchmesser G1 kleiner ist als der zweite Greifdurchmesser G2 (vgl. Fig. 3).

In Fig. 2-4 sind eine Seitenansicht, eine Draufsicht sowie eine Frontansicht einer erfindungsgemäßen Transportvorrichtung 40 zum Greifen, Halten und Führen von insbesondere flaschenartigen Behältern 4 gezeigt, wobei in einer Umfangsrichtung U der Transportvorrichtung 40 mehrere vorstehend beschriebene Greifvorrichtungen 2 angeordnet sind. Der Einfachheit halber ist in den Fig. 2-4 jeweils nur eine montierte Greifvorrichtung 2 gezeigt. Die Greifvorrichtungen 2 sind hierbei auf einer Trägerplatte 42 montiert, die ebenfalls als Lagereinheit 14 dient, die die Lagerbolzen 16, 18 aufweist.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Greifvorrichtung
- 4: Behälter
- 6: erstes Greifarmpaar
- 8: zweites Greifarmpaar
- 10: erster Greifarm
- 12: zweiter Greifarm
- 14: Lagereinheit
- 16: erster Lagerbolzen
- 18: zweiter Lagerbolzen
- 20: erstes Öffnungsmittel
- 22: Rolle
- 24: zweites Öffnungsmittel
- 26: Steuernocke
- 28: erste Steuerkurve
- 30: zweite Steuerkurve
- 32: erstes Schließmittel
- 34: zweites Schließmittel
- 36: erster Greifabschnitt
- 38: zweiter Greifabschnitt
- 40: Transportvorrichtung
- 42: Trägerplatte

- D1: Durchmesser der ersten Steuerkurve
- D2: Durchmesser der zweiten Steuerkurve
- G1: erster Greifdurchmesser
- G2: zweiter Greifdurchmesser
- U: Umfangsrichtung

## Patentansprüche

1. Greifvorrichtung (2) zum Greifen, Halten und Führen von insbesondere flaschenartigen Behältern (4), mit
- einem ersten und einem zweiten Greifarmpaar (6, 8), wobei jedes Greifarmpaar (6, 8) einen ersten Greifarm (10) und einen gegengleich ausgebildeten zweiten Greifarm (12) aufweist;
- einer Lagereinheit (14) zum Lagern der Greifarmpaare (6, 8), wobei die Lagereinheit (14) mindestens einen ersten und zweiten Lagerbolzen (16, 18) zum schwenkbaren Lagern des ersten und zweiten Greifarmpaares (6, 8) von einer Greifstellung in eine Öffnungsstellung oder umgekehrt aufweist;
wobei das erste und das zweite Greifarmpaar (6, 8) jeweils ein erstes Öffnungsmittel (20) aufweist und die Lagereinheit (14) ferner ein zweites Öffnungsmittel (24) aufweist, wobei die beiden Öffnungsmittel (20, 24) derart ausgebildet sind, das erste Greifarmpaar (6) unabhängig vom zweiten Greifarmpaar (8) von der Greifstellung in die Öffnungsstellung zu bewegen.

2. Greifvorrichtung (2) nach Anspruch 1, wobei das erste Öffnungsmittel (20) des ersten Greifarmpaares (6) und das erste Öffnungsmittel (20) des zweiten Greifarmpaares (8) jeweils eine Rolle (22) aufweist, wobei die Rollen (22) unterschiedlich ausgebildet sind, insbesondere unterschiedliche Durchmesser aufweisen, und während des Bewegens von der Greifstellung in die Öffnungsstellung in Kontakt mit dem zweiten Öffnungsmittel (24) kommen, um das erste Greifarmpaar (6) unabhängig vom zweiten Greifarmpaar (8) zu öffnen.

3. Greifvorrichtung (2) nach Anspruch 1 oder 2, wobei das zweite Öffnungsmittel (24) als Steuernocke (26) ausgebildet ist, die eine erste Steuerkurve (28) und eine zweite Steuerkurve (30) aufweist, wobei die Steuerkurven (28, 30) unterschiedliche Durchmesser (D1, D2) aufweisen.

4. Greifvorrichtung (2) nach einem der Ansprüche 1 bis 3, wobei jeweils der erste Greifarm (10) des ersten Greifarmpaares (6) und des zweiten Greifarmpaares (8) auf dem ersten Lagerbolzen (16) angeordnet sind und jeweils der zweite Greifarm (12) des ersten Greifarmpaares (6) und des zweiten Greifarmpaares (8) auf dem zweiten Lagerbolzen (18) angeordnet sind.

5. Greifvorrichtung (2) nach einem der Ansprüche 1 bis 4, wobei das erste Greifarmpaar (6) ein erstes Schließmittel (32) aufweist, zum Bewegen des ersten Greifarmpaares (6) von der Öffnungsstellung in die Greifstellung.

6. Greifvorrichtung (2) nach Anspruch 5, wobei das erste Schließmittel (32) als Magnetpaar oder Federelement ausgebildet ist.

7. Greifvorrichtung (2) nach einem der Ansprüche 1 bis 6, wobei das zweite Greifarmpaar (8) ein zweites Schließmittel (34) aufweist, zum Bewegen des zweiten Greifarmpaares (8) von der Öffnungsstellung in die Greifstellung.

8. Greifvorrichtung (2) nach Anspruch 7, wobei das zweite Schließmittel (34) als ein Magnetpaar oder Federelement ausgebildet ist.

9. Greifvorrichtung (2) nach einem der Ansprüche 1 bis 8, wobei das erste Greifarmpaar (6) einen ersten Greifabschnitt (36) mit einem ersten Greifdurchmesser (G1) und das zweite Greifarmpaar (8) einen zweiten Greifabschnitt (38) mit einem zweiten Greifdurchmesser (G2) aufweist, wobei der erste Greifdurchmesser (G1) kleiner ist als der zweite Greifdurchmesser (G2).

10. Transportvorrichtung (40) zum Greifen, Halten und Führen von insbesondere flaschenartigen Behältern (4), wobei in einer Umfangsrichtung (U) der Transportvorrichtung (40) wenigstens eine Greifvorrichtung (2) nach einem der Ansprüche 1 bis 9 angeordnet ist, derart, dass die Greifarmpaare (6, 8) der Greifvorrichtung (2) radial nach außen gerichtet sind.

## Geänderte Patentansprüche

### Geänderte Patentansprüche gemäss Regel 137(2) EPÜ.

1. Greifvorrichtung (2) zum Greifen, Halten und Führen von insbesondere flaschenartigen Behältern (4), mit
- einem ersten und einem zweiten Greifarmpaar (6, 8), wobei jedes Greifarmpaar (6, 8) einen ersten Greifarm (10) und einen gegengleich ausgebildeten zweiten Greifarm (12) aufweist;
- einer Lagereinheit (14) zum Lagern der Greifarmpaare (6, 8), wobei die Lagereinheit (14) mindestens einen ersten und zweiten Lagerbolzen (16, 18) zum schwenkbaren Lagern des ersten und zweiten Greifarmpaares (6, 8) von einer Greifstellung in eine Öffnungsstellung oder umgekehrt aufweist;
wobei das erste und das zweite Greifarmpaar (6, 8) jeweils ein erstes Öffnungsmittel (20) aufweist und die Lagereinheit (14) ferner ein zweites Öffnungsmittel (24) aufweist, wobei die beiden Öffnungsmittel (20, 24) derart ausgebildet sind, das erste Greifarmpaar (6) unabhängig vom zweiten Greifarmpaar (8) von der Greifstellung in die Öffnungsstellung zu bewegen, wobei jeweils der erste Greifarm (10) des ersten Greifarmpaares (6) und des zweiten Greifarmpaares (8) auf dem ersten Lagerbolzen (16) angeordnet sind und jeweils der zweite Greifarm (12) des ersten Greifarmpaares (6) und des zweiten Greifarmpaares (8) auf dem zweiten Lagerbolzen (18) angeordnet sind.

2. Greifvorrichtung (2) nach Anspruch 1, wobei das erste Öffnungsmittel (20) des ersten Greifarmpaares (6) und das erste Öffnungsmittel (20) des zweiten Greifarmpaares (8) jeweils eine Rolle (22) aufweist, wobei die Rollen (22) unterschiedlich ausgebildet sind, insbesondere unterschiedliche Durchmesser aufweisen, und während des Bewegens von der Greifstellung in die Öffnungsstellung in Kontakt mit dem zweiten Öffnungsmittel (24) kommen, um das erste Greifarmpaar (6) unabhängig vom zweiten Greifarmpaar (8) zu öffnen.

3. Greifvorrichtung (2) nach Anspruch 1 oder 2, wobei das zweite Öffnungsmittel (24) als Steuernocke (26) ausgebildet ist, die eine erste Steuerkurve (28) und eine zweite Steuerkurve (30) aufweist, wobei die Steuerkurven (28, 30) unterschiedliche Durchmesser (D1, D2) aufweisen.

4. Greifvorrichtung (2) nach einem der Ansprüche 1 bis 3, wobei das erste Greifarmpaar (6) ein erstes Schließmittel (32) aufweist, zum Bewegen des ersten Greifarmpaares (6) von der Öffnungsstellung in die Greifstellung.

5. Greifvorrichtung (2) nach Anspruch 4, wobei das erste Schließmittel (32) als Magnetpaar oder Federelement ausgebildet ist.

6. Greifvorrichtung (2) nach einem der Ansprüche 1 bis 5, wobei das zweite Greifarmpaar (8) ein zweites Schließmittel (34) aufweist, zum Bewegen des zweiten Greifarmpaares (8) von der Öffnungsstellung in die Greifstellung.

7. Greifvorrichtung (2) nach Anspruch 6, wobei das zweite Schließmittel (34) als ein Magnetpaar oder Federelement ausgebildet ist.

8. Greifvorrichtung (2) nach einem der Ansprüche 1 bis 7, wobei das erste Greifarmpaar (6) einen ersten Greifabschnitt (36) mit einem ersten Greifdurchmesser (G1) und das zweite Greifarmpaar (8) einen zweiten Greifabschnitt (38) mit einem zweiten Greifdurchmesser (G2) aufweist, wobei der erste Greifdurchmesser (G1) kleiner ist als der zweite Greifdurchmesser (G2).

9. Transportvorrichtung (40) zum Greifen, Halten und Führen von insbesondere flaschenartigen Behältern (4), wobei in einer Umfangsrichtung (U) der Transportvorrichtung (40) wenigstens eine Greifvorrichtung (2) nach einem der Ansprüche 1 bis 8 angeordnet ist, derart, dass die Greifarmpaare (6, 8) der Greifvorrichtung (2) radial nach außen gerichtet sind.
